# EUROPEAN PATENT APPLICATION

(11) **EP 4 398 663 A1**
(43) Date of publication of application: **10.07.2024**
(21) Application number: 22863326.9
(22) Date of filing: 26.08.2022
(51) Int. Cl.: H04W 72/12

(54) **MONITORING METHOD AND APPARATUS, WAKE-UP SIGNAL TRANSMISSION METHOD AND APPARATUS, TERMINAL, AND NETWORK-SIDE DEVICE**

(30) Priority: 01.09.2021 CN 202111021018
(71) Applicant: Vivo Mobile Communication Co., Ltd., Dongguan, Guangdong 523863 (CN)
(72) Inventor: LI, Dongru, Dongguan, Guangdong 523863 (CN); PAN, Xueming, Dongguan, Guangdong 523863 (CN); SUN, Xiaodong, Dongguan, Guangdong 523863 (CN); CHEN, Xiaohang, Dongguan, Guangdong 523863 (CN)
(74) Representative: Lavoix
(86) International application number: PCT/CN2022/115149
(87) International publication number: WO 2023/030189

(57) **Abstract**

This application discloses a monitoring method and apparatus, a wake-up signal transmission method and apparatus, a terminal, and a network-side device, and pertains to the field of communication technologies. The monitoring method in embodiments of this application includes: obtaining, by a terminal, wake-up signal configuration information; performing, by the terminal, detection for a wake-up signal within a first duration according to the wake-up signal configuration information, where the first duration belongs to a physical downlink control channel PDCCH monitoring time period configured by a network-side device; and determining, by the terminal, a monitoring behavior for a target channel based on the detection of the wake-up signal, where the target channel includes at least one of the following: physical downlink control channel PDCCH; physical downlink shared channel PDSCH; and physical uplink shared channel PUSCH.

## Description

### CROSS-REFERENCE TO RELATED APPLICATIONS

This application claims priority to Chinese Patent Application No. 202111021018.6 filed in China on September 1, 2021, which is incorporated herein by reference in its entirety.

### TECHNICAL FIELD

This application relates to the field of communication technologies, and specifically, relates to a monitoring method and apparatus, a wake-up signal transmission method and apparatus, a terminal, and a network-side device.

### BACKGROUND

Some services such as extended reality (Extended Reality, XR) services feature non-positive integer periods, and their service packets require data compression, rendering, and other processes at a server side, resulting in jitter within a specific time domain range at an actual time when a service packet reaches the network side.

To reduce a data scheduling delay caused by jitter of service packets, the network side may configure a longer physical downlink control channel (Physical Downlink Control Channel, PDCCH) monitoring duration, for example configuring a longer discontinuous reception (Discontinuous Reception, DRX) duration to cover the jitter range. However, although the scheduling delay is reduced, extending the PDCCH monitoring time brings about an increase in power consumption for monitoring by the terminal, which is not conducive to power saving for the terminal.

### SUMMARY

Embodiments of this application provide a monitoring method and apparatus, a wake-up signal transmission method and apparatus, a terminal, and a network-side device, so as to resolve a prior-art problem of failing to balance a data scheduling delay and power consumption of the terminal .

According to a first aspect, a monitoring method is provided, including:
obtaining, by a terminal, wake-up signal configuration information;
performing, by the terminal, detection for a wake-up signal within a first duration according to the wake-up signal configuration information, where the first duration belongs to a physical downlink control channel PDCCH monitoring time period configured by a network-side device; and
determining, by the terminal, a monitoring behavior for a target channel based on the detection of the wake-up signal, where the target channel includes at least one of the following:
   physical downlink control channel PDCCH;
   physical downlink shared channel (PDSCH: Physical Downlink Shared Channel, PDSCH); and
   physical uplink shared channel (Physical Uplink Shared Channel, PUSCH).

According to a second aspect, a wake-up signal transmission method is provided, including:
configuring, by a network-side device, wake-up signal configuration information for a terminal; and
transmitting, by the network-side device, a wake-up signal within a first duration according to the wake-up signal configuration information, where the first duration belongs to a physical downlink control channel PDCCH monitoring time period configured by the network-side device.

According to a third aspect, a monitoring apparatus is provided, applied to a terminal and including:
a first obtaining module, configured to obtain wake-up signal configuration information;
a first detection module, configured to: perform detection for a wake-up signal within a first duration according to the wake-up signal configuration information, where the first duration belongs to a physical downlink control channel PDCCH monitoring time period configured by a network-side device; and
a monitoring determining module, configured to: determine a monitoring behavior for a target channel based on the detection of the wake-up signal, where the target channel includes at least one of the following:
   physical downlink control channel PDCCH;
   physical downlink shared channel PDSCH; and
   physical uplink shared channel PUSCH.

According to a fourth aspect, a wake-up signal transmission apparatus is provided, applied to a network-side device and including:
a first configuration module, configured to configure wake-up signal configuration information for a terminal; and
a transmission module, configured to transmit a wake-up signal within a first duration according to the wake-up signal configuration information, where the first duration belongs to a physical downlink control channel PDCCH monitoring time period configured by the network-side device.

According to a fifth aspect, a terminal is provided, where the terminal includes a processor, a memory, and a program or instructions stored in the memory and capable of running on the processor, and when the program or instructions are executed by the processor, the steps of the method according to the first aspect are implemented.

According to a sixth aspect, a terminal is provided, including a processor and a communication interface. The communication interface is configured to configure wake-up signal configuration information, and the processor is configured to perform detection for a wake-up signal within a first duration according to the wake-up signal configuration information, where the first duration belongs to a physical downlink control channel PDCCH monitoring time period configured by the network-side device; and determine a monitoring behavior for a target channel based on the detection of the wake-up signal, where the target channel includes at least one of the following: physical downlink control channel PDCCH; physical downlink shared channel PDSCH; and physical uplink shared channel PUSCH.

According to a seventh aspect, a network-side device is provided, where the network-side device includes a processor, a memory, and a program or instructions stored in the memory and capable of running on the processor, and when the program or instructions are executed by the processor, the steps of the method according to the second aspect are implemented.

According to an eighth aspect, a network-side device is provided, including a processor and a communication interface, where the processor is configured to configure wake-up signal configuration information for a terminal via the communication interface, and transmit a wake-up signal within a first duration according to the wake-up signal configuration information, where the first duration belongs to a physical downlink control channel PDCCH monitoring time period configured by the network-side device.

According to a ninth aspect, a readable storage medium is provided, where a program or instructions are stored in the readable storage medium, and when the program or instructions are executed by a processor, the steps of the method according to the first aspect are implemented, or the steps of the method according to the second aspect are implemented.

According to a tenth aspect, a chip is provided, where the chip includes a processor and a communication interface, the communication interface is coupled to the processor, and the processor is configured to run a program or instructions to implement the method according to the first aspect or implement the method according to the second aspect.

According to an eleventh aspect, a computer program/program product is provided, where the computer program/program product is stored in a non-transitory storage medium, and the computer program/program product is executed by at least one processor to implement the steps of the method according to the first aspect or the steps of the method according to the second aspect.

According to a twelfth aspect, a communication device is provided, configured to execute the method according to the first aspect or execute the method according to the second aspect.

In the embodiments of this application, a wake-up signal monitoring occasion is configured to be within a PDCCH monitoring time period configured by the network-side device, and a monitoring behavior for the target channel is determined based on the detection of the wake-up signal. Configuring the wake-up signal monitoring occasion to be within the PDCCH monitoring time period makes it possible to reduce a data scheduling delay without increasing a PDCCH monitoring time. In this way, communication performance can be ensured and power saving for the terminal can be further implemented.

### BRIEF DESCRIPTION OF DRAWINGS

FIG. 1 is a block diagram of a wireless communication system to which the embodiments of this application are applicable;
FIG. 2 is a flowchart of steps of a monitoring method according to an embodiment of this application;
FIG. 3 is a schematic diagram of principles of example 1 according to an embodiment of this application;
FIG. 4 is a first schematic structural diagram of a terminal according to an embodiment of this application;
FIG. 5 is a schematic diagram of principles of example 2 according to an embodiment of this application;
FIG. 6 is a flowchart of steps of a wake-up signal transmission method according to an embodiment of this application;
FIG. 7 is a schematic structural diagram of a monitoring apparatus according to an embodiment of this application;
FIG. 8 is a schematic structural diagram of a wake-up signal monitoring apparatus according to an embodiment of this application;
FIG. 9 is a schematic structural diagram of a communication device according to an embodiment of this application;
FIG. 10 is a second schematic structural diagram of a terminal according to an embodiment of this application; and
FIG. 11 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

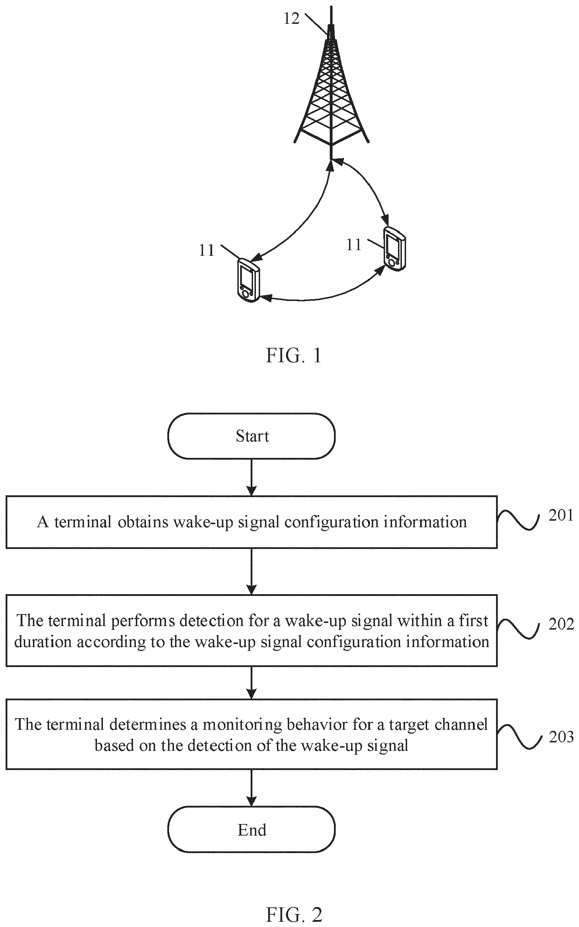

FIG. 1 is a block diagram of a wireless communication system to which the embodiments of this application are applicable. The wireless communication system includes a terminal 11 and a network-side device 12. The terminal 11 may also be referred to as a terminal device or user terminal (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (Vehicle UE, VUE), pedestrian user equipment (Pedestrian UE, PUE), and a smart home device (a home device with wireless communication function, such as refrigerator, TV, washing machine, or furniture). The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (Evolved Node B, eNB), a home NodeB, a home evolved NodeB, a wireless local area network (Wireless Local Area Networks, WLAN) access point, a wireless fidelity (Wireless Fidelity, WiFi) node, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a monitoring method and apparatus, and a terminal provided in the embodiments of this application by using some embodiments and application scenarios thereof with reference to the accompanying drawings.

As shown in FIG. 2, an embodiment of this application provides a monitoring method, including the following steps.

Step 201: A terminal obtains wake-up signal configuration information.

Step 202: The terminal performs detection for a wake-up signal within a first duration according to the wake-up signal configuration information, where the first duration belongs to a physical downlink control channel PDCCH monitoring time period configured by a network-side device.

It should be noted that the detection for the wake-up signal can be understood as monitoring for the wake-up signal. This is also applicable to related descriptions below and will not be repeated.

Step 203: The terminal determines a monitoring behavior for a target channel based on the detection of the wake-up signal, where the target channel includes at least one of the following:
physical downlink control channel PDCCH;
physical downlink shared channel (PDSCH: Physical Downlink Shared Channel, PDSCH); and
physical uplink shared channel (Physical Uplink Shared Channel, PUSCH).

Optionally, the PDSCH includes: a semi-statically configured PDSCH (for example, semi-persistent scheduling PDSCH (Semi-Persistent Scheduling PDSCH, SPS PDSCH)) and/or a dynamically scheduled PDSCH; and/or, the PUSCH includes: a semi-statically configured PUSCH (for example, configured grant PUSCH (Configured Grant PUSCH, CG PUSCH)) and/or dynamically scheduled PUSCH.

Optionally, the PDCCH monitoring time period configured by the network-side device includes: DRX active time (DRX active time, where, for example, the running periods of DRX timers such as a DRX onduration timer and a DRX inactivity timer all belong to the DRX active time), and/or a monitoring time period that is corresponding to a PDCCH monitoring occasion and configured by using radio resource control (Radio Resource Control, RRC).

Optionally, the PDCCH in this embodiment of this application includes at least one of a PDCCH of type (Type) 3 common search space (Common Search Space, CSS) set (set) and a PDCCH of a user specific search space (UE specific search space, USS) set, not including a PDCCH corresponding to at least one of Type0 CSS set, Type0A CSS set, Type1 CSS set, and Type2 CSS set. This is also applicable to related descriptions below and will not be repeated.

Optionally, the PDCCH in this embodiment of this application includes a PDCCH corresponding to at least one of Type 3 CSS set, USS set, Type0 CSS set, Type0A CSS set, Type1 CSS set, and Type2 CSS set. This is also applicable to related descriptions below and will not be repeated.

In at least one embodiment of this application, during the detecting for the wake-up signal, the terminal does not perform monitoring for a first channel, the first channel including at least one of PDCCH, PDSCH, and PUSCH.

In other words, the terminal does not simultaneously monitor the target channel during detection for or monitoring for the wake-up signal. This enables the terminal to monitor only either of the wake-up signal and the target channel, thereby avoiding an increase in power consumption of the terminal.

In an optional embodiment, step 202 includes:
in a case that the terminal detects the wake-up signal or in a case that the terminal detects the wake-up signal and the wake-up signal indicates monitoring the target channel, the terminal performs monitoring for the target channel.

For example, the terminal performing monitoring for the target channel includes: before the foregoing two cases occur, the terminal does not perform or performs monitoring for the target channel. In either of the foregoing two cases, the terminal starts to perform monitoring for the target channel, or the terminal resumes or continues monitoring for the target channel.

It should be noted that the terminal does not perform detection for the wake-up signal during the monitoring for the target channel.

In other words, during the monitoring for the target channel triggered in either of the foregoing two cases, the terminal does not simultaneously perform detection for the wake-up signal. This enables the terminal to monitor only either of the wake-up signal and the target channel, thereby avoiding an increase in power consumption of the terminal.

In another optional embodiment, step 202 includes:
in a case that the terminal does not detect the wake-up signal or in a case that the terminal detects the wake-up signal and the wake-up signal indicates not monitoring the target channel, the terminal skips the monitoring for the target channel.

It should be noted that the terminal detecting no wake-up signal means that the terminal performs detection for a wake-up signal but detects no wake-up signal. That the terminal cannot perform detection for the wake-up signal or does not perform detection for the wake-up signal does not belong to a case of the terminal detecting no wake-up signal .

For example, the terminal not performing monitoring for the target channel includes: the terminal performs monitoring or does not perform monitoring for the target channel before the foregoing two cases occur, and the terminal suspends monitoring for the target channel in either of the foregoing two cases.

In at least one optional embodiment of this application, the step 202 includes:
in a case that the terminal detects a wake-up signal and the wake-up signal indicates a first time interval, the terminal performs monitoring for the target channel when or after the ending of the first time interval, and/or the terminal skips the monitoring for the target channel within the first time interval.

Further, the method further includes:
performing, by the terminal, detection for the wake-up signal within the first time interval.

In another embodiment, the terminal does not perform detection for the wake-up signal within the first time interval, so as to implement further power saving for the terminal.

For example, the wake-up signal indicates that monitoring for the target channel starts after the first time interval (that is, a wake-up time is indirectly indicated). If the first time interval is 5ms, the terminal does not perform monitoring for the target channel within the 5ms, but performs monitoring for the target channel after the 5ms; further, the terminal does not perform detection for the wake-up signal within the 5ms.

In at least one optional embodiment of this application, the method further includes:
in a case that the terminal receives a second-channel skipping indication, performing, by the terminal, detection for the wake-up signal within the second-channel skipping duration indicated by the second-channel skipping indication.

The "second-channel skipping indication" is used to indicate that the terminal suspends monitoring on the second channel or does not monitor the second channel during the second-channel skipping time period. In addition, the third channel includes at least one of PDCCH, PDSCH, and PUSCH. In an optional embodiment, the third channel is PDCCH, and the PDCCH includes: a PDCCH corresponding to the type 3 CSS set and a PDCCH corresponding to the USS set.

Optionally, the "second-channel skipping indication" may be implemented by switching to a dormant search space group. The terminal switches to a dormant search space group, and does not perform monitoring on the third channel.

In an optional embodiment, in a case that the terminal receives a second-channel skipping indication, the terminal performs detection for the wake-up signal within the second-channel skipping duration indicated by the second-channel skipping indication, thereby implementing further power saving for the terminal.

In at least one optional embodiment of this application, the method further includes:
in a case that the terminal detects the wake-up signal or in a case that the terminal detects the wake-up signal and the wake-up signal indicates monitoring the target channel,
starting or restarting, by the terminal, a DRX inactivity timer,
   or
adjusting, by the terminal, the starting time of a DRX onduration timer to be the ending time of a time unit in which the wake-up signal is detected.

The time unit may be millisecond, symbol, slot, subframe, or the like, which is not limited herein.

In an optional embodiment, in a case that the terminal detects the wake-up signal or in a case that the terminal detects the wake-up signal and the wake-up signal indicates monitoring the target channel, the terminal starts or restarts a DRX inactivity timer and simultaneously performs monitoring for the target channel.

In another optional embodiment, in a case that the terminal detects the wake-up signal or in a case that the terminal detects the wake-up signal and the wake-up signal indicates monitoring the target channel, the terminal adjusts the starting time of a DRX onduration timer to be the ending time of a time unit in which the wake-up signal is detected and performs monitoring for the target channel at the starting time of the adjusted DRX onduration timer.

For example, in a case that the terminal detects the wake-up signal or in a case that the terminal detects the wake-up signal and the wake-up signal indicates monitoring the target channel, the terminal starts the DRX inactivity timer and performs monitoring for the target channel.

In at least one optional embodiment of this application, the method further includes:
in a case that the terminal detects the wake-up signal and the wake-up signal indicates a second time interval,
starting or restarting, by the terminal, a DRX inactivity timer when or after the ending of the second time interval; or
adjusting, by the terminal, the starting time of a DRX onduration timer to be the ending time of the second time interval; where
the terminal performs monitoring for the target channel when or after the ending of the second time interval, and/or the terminal skips the monitoring for the target channel within the second time interval.

In an optional embodiment, in a case that the terminal detects the wake-up signal and the wake-up signal indicates a second time interval, when or after the ending of the second time interval, the terminal starts or restarts a DRX inactivity timer and simultaneously performs monitoring for the target channel.

In another optional embodiment, in a case that the terminal detects the wake-up signal and the wake-up signal indicates a second time interval, the terminal adjusts the starting time of the DRX onduration timer to the ending time of the second time interval and starts monitoring for the target channel at the starting time of the adjusted DRX onduration timer.

For example, the wake-up signal indicates the second time interval (that is, a wake-up time is indirectly indicated). If the second time interval is 6ms, the terminal does not perform monitoring for the target channel within the 6ms, and after the 6ms, the terminal starts the DRX inactivity timer and performs monitoring for the target channel. Further, the terminal performs detection for the wake-up signal during the 6ms, or the terminal does not perform detection for the wake-up signal within the 6ms.

Optionally, in this embodiment of this application, the terminal preferentially performs detection for the wake-up signal during a duration with both a wake-up signal monitoring occasion and a target channel monitoring occasion. After the terminal detects a wake-up signal or detects a wake-up signal that indicates monitoring the target channel, the terminal starts monitoring for the target channel. In this way, monitoring for the target channel is replaced by monitoring for the wake-up signal, thereby implementing power saving for the terminal.

In at least one embodiment of this application, the wake-up signal configuration information includes at least one of the following:
a wake-up signal monitoring occasion;
the first duration;
a first timer, where a length of the first timer is equal to a length of the first duration, and the terminal performs a behavior of monitoring for the wake-up signal and the monitoring behavior for the target channel during the running of the first timer; in other words, the network specifies the length of the first duration by configuring the first timer;
a wake-up signal monitoring period; where, for example, the wake-up signal monitoring period is related to a period of the DRX onduration;
a period of the first duration; where, optionally, the first duration may be periodic; for example, the period of the first duration is related to a DRX cycle; for another example, the network-side device configures a period size of the first duration;
a time-frequency domain resource occupied by the wake-up signal; where, for example, the time-frequency domain resource includes a time-frequency domain pattern;
a frequency hopping format of a wake-up signal; and
sequence information of the wake-up signal, where, for example, the sequence information includes: a sequence index, a sequence generation manner, and the like.

In an optional embodiment, the wake-up signal monitoring occasion is configured to be within the first duration.

Correspondingly, step 201 includes:
the terminal performs detection on the wake-up signal monitoring occasion within the first duration, according to the wake-up signal configuration information.

In at least one embodiment of this application, the first duration is a discontinuous reception DRX onduration or part of the DRX onduration.

For example, the first duration being a DRX onduration includes: a start time of the first duration being a start time of the DRX onduration, and an end time of the first duration being an end time of the DRX onduration.

The first duration being part of the DRX onduration includes:
a start time of the first duration is a start time of the DRX onduration and an end time of the first duration is earlier than an end time of the DRX onduration; or
the end time of the first duration is the end time of the DRX onduration and the start time of the first duration is later than the start time of the DRX onduration.

Optionally, the wake-up signal is a low power wake-up signal, where low power means that a relative power consumed by the terminal for wake-up signal monitoring is lower than a power consumed for PDCCH monitoring. For example, a relative power consumed for the wake-up signal is greater than a relative power consumed in a sleep state.

Optionally, the wake-up signal may be received by a specific receiver, such as a near-zero power receiver. This implements low power consumption. For example, step 201 includes:
the terminal performs detection for the wake-up signal within the first duration according to the wake-up signal configuration information by using a near-zero power receiver.

In order to more clearly describe the monitoring method provided in this embodiment of this application, the following provides description in combination with two examples:

### Example 1

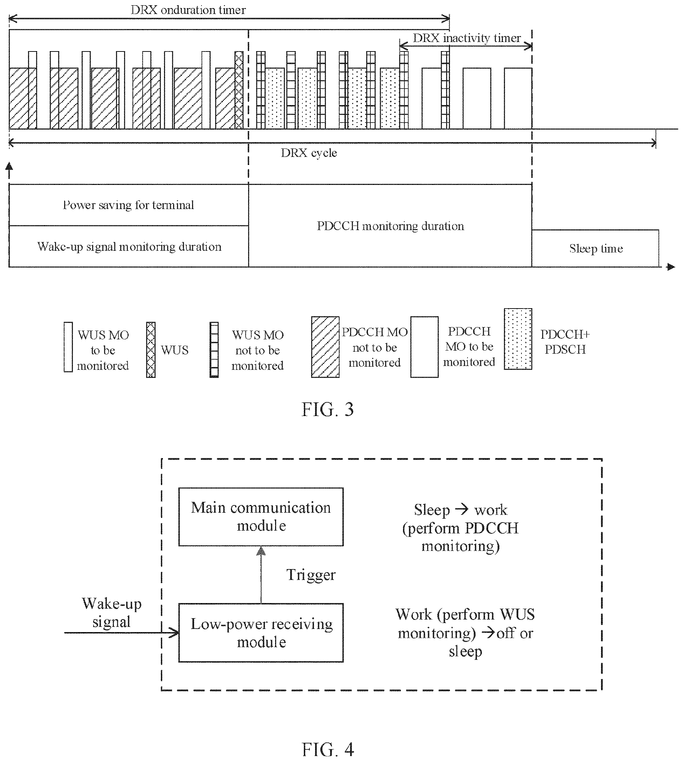

The first duration is a DRX onduration, and the network configures a wake-up signal monitoring occasion (that is, wake-up signal (Wake-up signal, WUS) monitoring occasion (Monitor Occasion, MO)) to be within the DRX onduration, as shown in FIG. 3. In addition, the network further configures a time-frequency resource occupied by the WUS MO, a monitoring period of the WUS MO, and the like. For example, there is only one sequence for WUS, and if the terminal detects this WUS sequence, it means being awakened for PDCCH monitoring, and if it does not detect this sequence, which means that the terminal is not awakened for PDCCH monitoring, the terminal does not perform PDCCH monitoring.

As shown in FIG. 3, on the 8th WUS MO, the terminal detects a wake-up signal, and then starts PDCCH monitoring. There is a specific application delay between reception of the WUS and a start position of PDCCH monitoring, and the application delay may be configured by the network side or specified by the protocol.

During a duration of PDCCH monitoring triggered by the detected wake-up signal, the terminal receives a PDSCH scheduled by the PDCCH. After a DRX-inactivitytimer (drx-inactivitytimer) expires, the terminal ends PDCCH monitoring and enters a DRX off (off) state, that is, a sleep state. It should be noted that the terminal does not simultaneously perform WUS MO monitoring during the PDCCH monitoring duration.

Furthermore, in an embodiment, the WUS may be a low power wake-up signal, which means that the WUS is received by using a low power receiver to implement low power consumption. As shown in FIG. 4, the terminal includes two modules, a first module being a main communication module for sending and receiving mobile communication data, and a second module being a low-power receiving module for receiving a wake-up signal. The main communication module enters a sleep state (not monitoring the PDCCH) for a period of time according to DRX or other indications. In a case that the low-power receiving module detects a wake-up signal sent by a transmitter, it triggers wake-up of the main communication module, and the main communication module enters a working state (for example, enters the PDCCH monitoring duration) and can receive and send data. In a case that no WUS is received within the DRX onduration, the main communication module is in a sleep state and does not perform PDCCH monitoring.

The power saving effect for the terminal shown in FIG. 3 can be implemented in this example. In FIG. 3, during the DRX onduration, the terminal preferentially monitors the WUS MO, and power consumption for WUS MO monitoring is much smaller than power consumption for PDCCH monitoring. In addition, once detecting a WUS, the terminal resumes PDCCH monitoring and suspends monitoring the WUS. In this way, a balance between power saving for the terminal and reduction of data scheduling delay can be achieved in this embodiment.

### Example 2

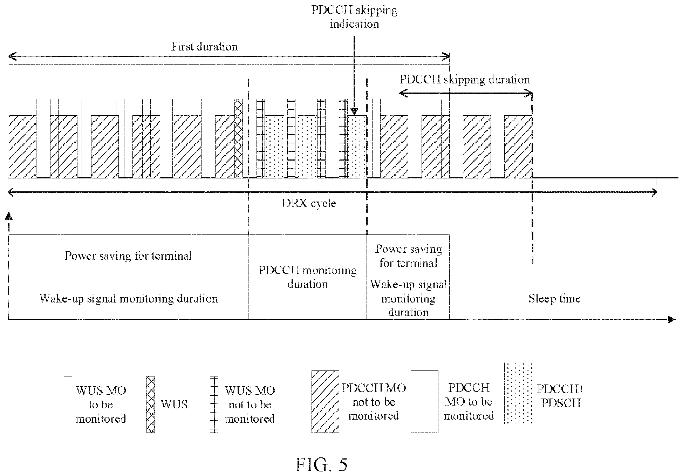

The network configures a first duration, where the first duration is related to a service period and a service jitter delay range. For example, the service is an XR service. The network configures a WUS MO to be within the first duration, that is, the terminal monitors the WUS within the first duration. The network also configures a PDCCH skipping indication for the terminal, such as a PDCCH skipping indication (PDCCH skipping indication) carried by downlink control information (Downlink Control Information, DCI). Content indicated by the PDCCH skipping indication is a value of a PDCCH skipping duration, as shown in FIG. 5.

In addition, the processes of monitoring the wake-up signal and monitoring the target channel triggered thereby are the same as those in Example 1, and details are not repeated herein.

In FIG. 5, the terminal receives, within a PDCCH monitoring duration in the figure, a PDCCH skipping indication sent by the network and indicating a length of the PDCCH skipping duration. Because WUS MOs are present within the PDCCH skipping duration for the terminal, the terminal may resume monitoring on the WUS MOs within the PDCCH skipping duration until the end of the first duration, and then the terminal no longer applies the foregoing monitoring rules for the WUS MOs but follows the prior art.

In summary, in this embodiment of this application, a wake-up signal monitoring occasion is configured to be within a PDCCH monitoring time period configured by the network-side device, and a monitoring behavior for the target channel is determined based on the detection of the wake-up signal (for example, monitoring on the WUS MOs is preferentially performed within the first duration configured with the WUS MOs, and after a WUS indicating wake-up is detected, PDCCH monitoring is initiated). In this way, communication performance can be ensured and power saving for the terminal can be further implemented.

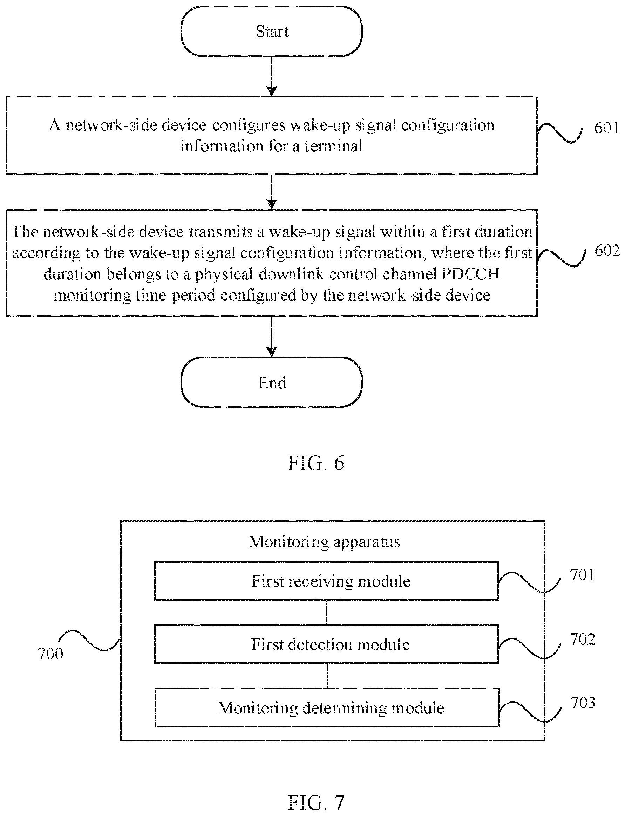

As shown in FIG. 6, an embodiment of this application further provides a wake-up signal transmission method, including the following steps.

Step 601: A network-side device configures wake-up signal configuration information for a terminal.

Step 602: The network-side device transmits a wake-up signal within a first duration according to the wake-up signal configuration information, where the first duration belongs to a physical downlink control channel PDCCH monitoring time period configured by the network-side device.

Optionally, the PDCCH monitoring time period configured by the network-side device includes: DRX active time (DRX active time, where, for example, running periods of DRX timers such as a DRX onduration timer and a DRX inactivity timer all belong to the DRX active time), and/or a monitoring time period that is corresponding to a PDCCH monitoring occasion and configured by using RRC.

In at least one embodiment of this application, the wake-up signal configuration information includes at least one of the following:
a wake-up signal monitoring occasion;
the first duration;
a first timer, where a length of the first timer is equal to a length of the first duration, and the terminal performs a behavior of monitoring for the wake-up signal and monitoring on a target channel during running of the first timer;
a wake-up signal monitoring period;
a period of the first duration; where, optionally, the first duration may be periodic; for example, the period of the first duration is related to a DRX cycle; for another example, the network-side device configures a period size of the first duration;
a time-frequency domain resource occupied by the wake-up signal; where, for example, the time-frequency domain resource includes a time-frequency domain pattern;
a frequency hopping format of a wake-up signal; and
sequence information of the wake-up signal, where, for example, the sequence information includes: a sequence index, a sequence generation manner, and the like.

In an optional embodiment, the wake-up signal monitoring occasion is configured to be within the first duration.

In at least one embodiment of this application, the method further includes:
in a case that the network-side device transmits the wake-up signal, or in a case that the network-side device transmits the wake-up signal and the wake-up signal indicates monitoring on a target channel,
starting or restarting, by the network-side device, a DRX inactivity timer, or
adjusting, by the network-side device, the starting time of a DRX onduration timer to be the ending time of a time unit in which the wake-up signal is transmitted.

The time unit may be millisecond, symbol, slot, subframe, or the like, which is not limited herein.

In an optional embodiment, in a case that the network-side device transmits the wake-up signal or in a case that the network-side device transmits the wake-up signal and the wake-up signal indicates monitoring the target channel, the network-side device starts or restarts a DRX inactivity timer and simultaneously performs transmission of the target channel.

In another optional embodiment, in a case that the network-side device transmits the wake-up signal or in a case that the network-side device transmits the wake-up signal and the wake-up signal indicates monitoring the target channel, the network-side device adjusts the starting time of a DRX onduration timer to be the ending time of a time unit in which the wake-up signal is detected and performs transmission of the target channel at the starting time of the adjusted DRX onduration timer.

Optionally, the target channel includes at least one of PDCCH, PDSCH, and PUSCH.

In at least one optional embodiment of this application, the method further includes:
in a case that the network-side device transmits the wake-up signal and the wake-up signal indicates a third time interval,
starting or restarting, by the network-side device, a DRX inactivity timer when or after the third time interval elapses; or
adjusting, by the network-side device, the starting time of a DRX onduration timer to be the ending time of the third time interval transmitted; where
the terminal performs monitoring for the target channel when or after the third time interval elapses, and/or the terminal skips the monitoring for the target channel within the third time interval.

In an optional embodiment, in a case that the network-side device transmits the wake-up signal and the wake-up signal indicates a third time interval, when or after the third time interval elapses, the network-side device starts or restarts a DRX inactivity timer and simultaneously performs transmission of the target channel.

In another optional embodiment, in a case that the network-side device transmits the wake-up signal and the wake-up signal indicates a third time interval, the network-side device adjusts the starting time of the DRX onduration timer to the ending time of the third time interval detected and performs transmission of the target channel at the starting time of the adjusted DRX onduration timer.

In at least one embodiment of this application, the first duration is a discontinuous reception DRX onduration or part of the DRX onduration.

For example, the first duration being a DRX onduration includes: a start time of the first duration being a start time of the DRX onduration, and an end time of the first duration being an end time of the DRX onduration.

The first duration being part of the DRX onduration includes:
a start time of the first duration is a start time of the DRX onduration and an end time of the first duration is earlier than an end time of the DRX onduration; or
the end time of the first duration is the end time of the DRX onduration and the start time of the first duration is later than the start time of the DRX onduration.

Optionally, the wake-up signal is a low power wake-up signal, where low power means that a relative power consumed by the terminal for wake-up signal monitoring is lower than a power consumed for PDCCH monitoring. For example, a relative power consumed for the wake-up signal is greater than a relative power consumed in a sleep state.

Optionally, the wake-up signal may be received by a specific receiver, such as a near-zero power receiver. This implements low power consumption.

In this embodiment of this application, a wake-up signal monitoring occasion is configured to be within a PDCCH monitoring time period configured by the network-side device, and the terminal determines a monitoring behavior for the target channel based on the detection of the wake-up signal (for example, monitoring on WUS MOs is preferentially performed within the first duration configured with the WUS MOs, and after a WUS indicating wake-up is detected, PDCCH monitoring is initiated). In this way, communication performance can be ensured and power saving for the terminal can be further implemented.

It should be noted that the monitoring method or wake-up signal transmission method in the embodiments of this application may be executed by a monitoring apparatus or wake-up signal transmission apparatus, or by a control module for executing the monitoring method or wake-up signal transmission method in the monitoring apparatus or wake-up signal transmission apparatus. In the embodiments of this application, the monitoring apparatus or wake-up signal transmission apparatus provided by the embodiments of this application is described by using the monitoring method or wake-up signal transmission method being performed by the monitoring apparatus or wake-up signal transmission apparatus as an example.

As shown in FIG. 7, an embodiment of this application further provides a monitoring apparatus 700, applied to a terminal and including:
a first obtaining module 701, configured to obtain wake-up signal configuration information;
a first detection module 702, configured to: perform detection for a wake-up signal within a first duration according to the wake-up signal configuration information, where the first duration belongs to a physical downlink control channel PDCCH monitoring time period configured by a network-side device; and
a monitoring determining module 703, configured to: determine a monitoring behavior for a target channel based on the detection of the wake-up signal, where the target channel includes at least one of the following:
   physical downlink control channel PDCCH;
   physical downlink shared channel PDSCH; and
   physical uplink shared channel PUSCH.

In an optional embodiment, during the detecting for the wake-up signal, the terminal does not perform monitoring for a first channel, the first channel including at least one of PDCCH, PDSCH, and PUSCH.

In an optional embodiment, the monitoring determining module includes:
a first submodule, configured to: in a case that the terminal detects the wake-up signal or in a case that the terminal detects the wake-up signal and the wake-up signal indicates monitoring the target channel, perform monitoring for the target channel.

In an optional embodiment, the terminal does not perform detection for the wake-up signal during the monitoring for the target channel.

In an optional embodiment, the monitoring determining module includes:
a second submodule, configured to: in a case that the terminal does not detect the wake-up signal or in a case that the terminal detects the wake-up signal and the wake-up signal indicates not monitoring the target channel, skip monitoring for the target channel.

In an optional embodiment, the monitoring determining module includes:
a third submodule, configured to: in a case that the terminal detects a wake-up signal and the wake-up signal indicates a first time interval, perform monitoring for the target channel when or after the ending of the first time interval, and/or skip monitoring for the target channel within the first time interval.

In an optional embodiment, the apparatus further includes:
a second detection module, configured to: perform detection for the wake-up signal within the first time interval.

In an optional embodiment, the apparatus further includes:
a third detection module, configured to: in a case that the terminal receives a second-channel skipping indication, perform detection for the wake-up signal within the second-channel skipping duration indicated by the second-channel skipping indication.

In an optional embodiment, the apparatus further includes:
a first processing module, configured to: in a case that the terminal detects the wake-up signal or in a case that the terminal detects the wake-up signal and the wake-up signal indicates monitoring the target channel, start or restart a DRX inactivity timer; or adjust the starting time of the DRX onduration timer to be the ending time of a time unit in which the wake-up signal is detected.

In an optional embodiment, the apparatus further includes:
a second processing module, configured to: in a case that the terminal detects the wake-up signal and the wake-up signal indicates a second time interval, start or restart a DRX inactivity timer when or after the ending of the second time interval; or adjust the starting time of a DRX onduration timer to be the ending time of the second time interval; where
the terminal performs monitoring for the target channel when or after the ending of the second time interval, and/or the terminal skips the monitoring for the target channel within the second time interval.

In an optional embodiment, the wake-up signal configuration information includes at least one of the following:
a wake-up signal monitoring occasion;
the first duration;
a first timer, where a length of the first timer is equal to a length of the first duration, and the terminal performs a behavior of monitoring for the wake-up signal and the monitoring behavior for the target channel during the running of the first timer;
a wake-up signal monitoring period;
a period of the first duration;
a time-frequency domain resource occupied by a wake-up signal;
a frequency hopping format of a wake-up signal; and
sequence information of a wake-up signal.

In an optional embodiment, the wake-up signal monitoring occasion is configured to be within the first duration.

In an optional embodiment, the first detection module includes:
a first detection submodule, configured to perform detection on the wake-up signal monitoring occasion within the first duration, according to the wake-up signal configuration information.

In an optional embodiment, the first duration is a discontinuous reception DRX onduration or part of the DRX onduration.

In an optional embodiment, the first duration being part of the DRX onduration includes:
a start time of the first duration is a start time of the DRX onduration and an end time of the first duration is earlier than an end time of the DRX onduration; or
the end time of the first duration is the end time of the DRX onduration and the start time of the first duration is later than the start time of the DRX onduration.

In an optional embodiment, the first detection module includes:
a second detection submodule, configured to perform detection for the wake-up signal within the first duration according to the wake-up signal configuration information by using a near-zero power receiver.

In this embodiment of this application, a wake-up signal monitoring occasion is configured to be within a PDCCH monitoring time period configured by the network-side device, and a monitoring behavior for the target channel is determined based on the detection of the wake-up signal (for example, monitoring on WUS MOs is preferentially performed within the first duration configured with the WUS MOs, and after a WUS indicating wake-up is detected, PDCCH monitoring is initiated). In this way, communication performance can be ensured and power saving for the terminal can be further implemented.

It should be noted that the monitoring apparatus provided in this embodiment of this application is an apparatus capable of executing the foregoing monitoring method, and all embodiments of the foregoing monitoring method are applicable to the apparatus, with the same or similar beneficial effects achieved.

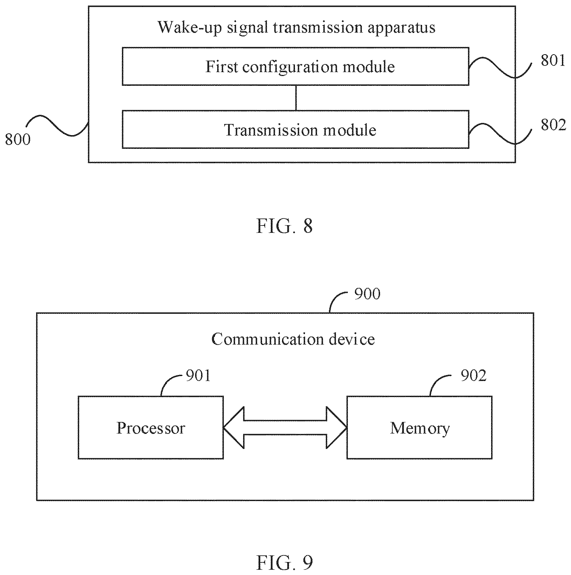

As shown in FIG. 8, an embodiment of this application further provides a wake-up signal transmission apparatus 800, applied to a network-side device and including:
a first configuration module 801, configured to configure wake-up signal configuration information for a terminal; and
a transmission module 802, configured to transmit a wake-up signal within a first duration according to the wake-up signal configuration information, where the first duration belongs to a physical downlink control channel PDCCH monitoring time period configured by the network-side device.

In an optional embodiment, the apparatus further includes:
a second configuration module, configured to send the wake-up signal configuration information to the terminal, the wake-up signal configuration information including at least one of the following:
a wake-up signal monitoring occasion;
the first duration;
a first timer, where a length of the first timer is equal to a length of the first duration, and the terminal performs a behavior of monitoring for the wake-up signal and monitoring on a target channel during running of the first timer;
a wake-up signal monitoring period;
a period of the first duration;
a time-frequency domain resource occupied by a wake-up signal;
a frequency hopping format of a wake-up signal; and
sequence information of a wake-up signal.

In an optional embodiment, the wake-up signal monitoring occasion is configured to be within the first duration.

In an optional embodiment, the apparatus further includes:
a third processing module, configured to: in a case that the network-side device transmits the wake-up signal, or in a case that the network-side device transmits the wake-up signal and the wake-up signal indicates monitoring on a target channel, start or restart a DRX inactivity timer; or adjust the starting time of a DRX onduration timer to be the ending time of a time unit in which the wake-up signal is transmitted.

In an optional embodiment, the apparatus further includes:
a fourth processing module, configured to: in a case that the network-side device transmits the wake-up signal and the wake-up signal indicates a third time interval, start or restart a DRX inactivity timer when or after the third time interval elapses; or adjust the starting time of a DRX onduration timer to be the ending time of the third time interval transmitted; where
the terminal performs monitoring for the target channel when or after the third time interval elapses, and/or the terminal skips the monitoring for the target channel within the third time interval.

In an optional embodiment, the first duration is a discontinuous reception DRX onduration or part of the DRX onduration.

In an optional embodiment, the first duration being part of the DRX onduration includes:
a start time of the first duration is a start time of the DRX onduration and an end time of the first duration is earlier than an end time of the DRX onduration; or
the end time of the first duration is the end time of the DRX onduration and the start time of the first duration is later than the start time of the DRX onduration.

In this embodiment of this application, a wake-up signal monitoring occasion is configured to be within a PDCCH monitoring time period configured by the network-side device, and the terminal determines a monitoring behavior for the target channel based on the detection of the wake-up signal (for example, monitoring on WUS MOs is preferentially performed within the first duration configured with the WUS MOs, and after a WUS indicating wake-up is detected, PDCCH monitoring is initiated). In this way, communication performance can be ensured and power saving for the terminal can be further implemented.

It should be noted that the wake-up signal transmission apparatus provided in the embodiments of this application is an apparatus capable of executing the foregoing wake-up signal transmission method, and all embodiments of the foregoing wake-up signal transmission method are applicable to the apparatus, with the same or similar beneficial effects achieved.

The monitoring apparatus in this embodiment of this application may be an apparatus, or an apparatus or electric device having an operating system, or may be a component, an integrated circuit, or a chip in the terminal. The apparatus or electric device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (Personal computer, PC), a television (Television, TV), a teller machine, a self-service machine, or the like, which is not specifically limited in this embodiment of this application.

The monitoring apparatus or wake-up signal transmission apparatus provided in the embodiments of this application can implement the processes implemented in the method embodiment in FIG. 2 to FIG. 6, with the same technical effects achieved. To avoid repetition, details are not described herein again.

Optionally, as shown in FIG. 9, an embodiment of this application further provides a communication device 900, including a processor 901, a memory 902, and a program or instructions stored in the memory 902 and capable of running on the processor 901. For example, when the communication device is a terminal and when the program or instructions are executed by the processor 901, the processes of the foregoing embodiments of the monitoring method are implemented, with the same technical effects achieved. For another example, when the communication device is a network-side device and when the program or instructions are executed by the processor 901, the processes of the foregoing embodiments of the wake-up signal transmission method are implemented, with the same technical effects achieved. To avoid repetition, details are not described herein again.

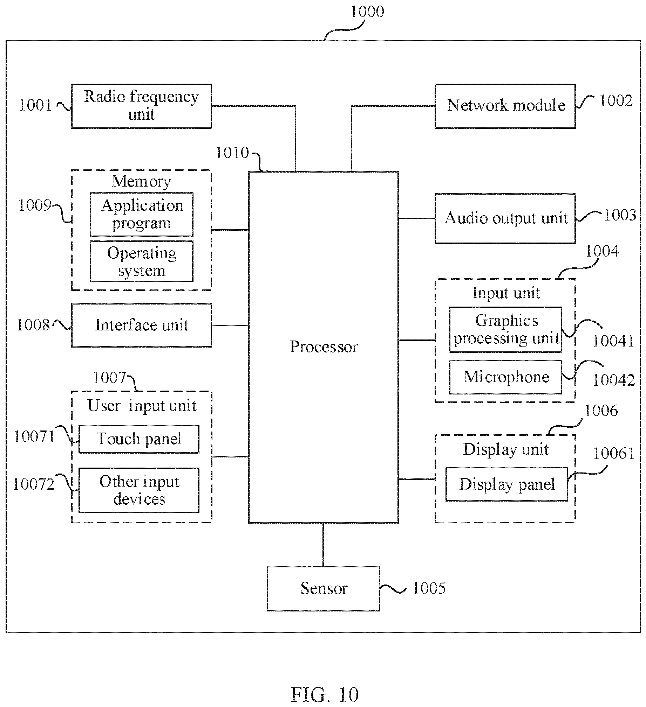

An embodiment of this application further provides a terminal, including a processor and a communication interface. The communication interface is configured to configure wake-up signal configuration information, and the processor is configured to perform detection for a wake-up signal within a first duration according to the wake-up signal configuration information, where the first duration belongs to a physical downlink control channel PDCCH monitoring time period configured by the network-side device; and determine a monitoring behavior for a target channel based on the detection of the wake-up signal, where the target channel includes at least one of the following: physical downlink control channel PDCCH; physical downlink shared channel PDSCH; and physical uplink shared channel PUSCH. The terminal embodiments correspond to the foregoing terminal-side method embodiments, and the implementation processes and implementations of the foregoing method embodiments can be applied to the terminal embodiments, with the same technical effects achieved. Specifically, FIG. 10 is a schematic diagram of a hardware structure of a terminal for implementing the embodiments of this application.

The terminal 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 10 does not constitute any limitation on the terminal. The terminal may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 may include a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, the radio frequency unit 1001 receives downlink data from a network-side device, and then sends the downlink data to the processor 1010 for processing; and also sends uplink data to the network-side device. Generally, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may include a program or instruction storage area and a data storage area. The program or instruction storage area may store an operating system, an application program or instruction required by at least one function (for example, a sound playback function or an image playback function), and the like. In addition, the memory 1009 may include a high-speed random access memory, and may further include a non-volatile memory. The non-volatile memory may be a read-only memory (read-only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another volatile solid-state storage device.

The processor 1010 may include one or more processing units. Optionally, an application processor and a modem processor may be integrated in the processor 1010. The application processor primarily processes an operating system, user interfaces, application programs or instructions, and the like. The modem processor primarily processes radio communication, for example, being a baseband processor. It can be understood that the modem processor may alternatively be not integrated in the processor 1010.

The radio frequency unit 1001 is configured to obtain wake-up signal configuration information.

The processor 1010 is configured to: perform detection for a wake-up signal within a first duration according to the wake-up signal configuration information, where the first duration belongs to a physical downlink control channel PDCCH monitoring time period configured by a network-side device; and determine a monitoring behavior for a target channel based on the detection of the wake-up signal, where the target channel includes at least one of the following:
physical downlink control channel PDCCH;
physical downlink shared channel PDSCH; and
physical uplink shared channel PUSCH.

In this embodiment of this application, a wake-up signal monitoring occasion is configured to be within a PDCCH monitoring time period configured by the network-side device, and a monitoring behavior for the target channel is determined based on the detection of the wake-up signal (for example, monitoring on WUS MOs is preferentially performed within the first duration configured with the WUS MOs, and after a WUS indicating wake-up is detected, PDCCH monitoring is initiated). In this way, communication performance can be ensured and power saving for the terminal can be further implemented.

It should be noted that the terminal provided in this embodiment of this application is a terminal capable of executing the foregoing monitoring method, and all embodiments of the foregoing monitoring method are applicable to the terminal, with the same or similar beneficial effects achieved.

An embodiment of this application further provides a network-side device, including a processor and a communication interface, where the processor is configured to configure wake-up signal configuration information for a terminal via the communication interface, and transmit a wake-up signal within a first duration according to the wake-up signal configuration information, where the first duration belongs to a physical downlink control channel PDCCH monitoring time period configured by the network-side device. The network-side device embodiments correspond to the foregoing network-side device method embodiments, and the implementation processes and implementations of the foregoing method embodiments can be applied to the network-side device embodiments, with the same technical effects achieved.

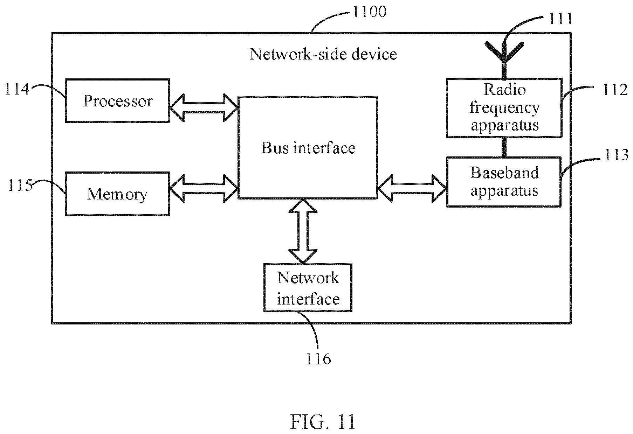

Specifically, an embodiment of this application further provides a network-side device. As shown in FIG. 11, the network side device 1100 includes an antenna 111, a radio frequency apparatus 112, and a baseband apparatus 113. The antenna 111 is connected to the radio frequency apparatus 112. In an uplink direction, the radio frequency apparatus 112 receives information by using the antenna 111, and sends the received information to the baseband apparatus 113 for processing. In a downlink direction, the baseband apparatus 113 processes to-be-sent information, and sends the information to the radio frequency apparatus 112; and the radio frequency apparatus 112 processes the received information and then sends the information out by using the antenna 111.

The frequency band processing apparatus may be located in the baseband apparatus 113. The method performed by the network-side device in the foregoing embodiments may be implemented in the baseband apparatus 113, and the baseband apparatus 113 includes a processor 114 and a memory 115.

The baseband apparatus 113 may include, for example, at least one baseband board, where a plurality of chips are disposed on the baseband board. As shown in FIG. 11, one of the chips, for example, the processor 114, is connected to the memory 115, to invoke a program in the memory 115 to perform the operation of the network device shown in the foregoing method embodiments.

The baseband apparatus 113 may further include a network interface 116, configured to exchange information with the radio frequency apparatus 112, where the interface is, for example, a common public radio interface (Common Public Radio Interface, CPRI).

Specifically, the network-side device in this embodiment of this application further includes: instructions or a program stored in the memory 115 and capable of running on the processor 114. The processor 114 invokes the instructions or program in the memory 115 to execute the method executed by the modules shown in FIG. 11, with the same technical effects achieved. To avoid repetition, details are not repeated herein.

An embodiment of this application further provides a readable storage medium, where a program or instructions are stored in the readable storage medium. When the program or instructions are executed by a processor, the processes of the foregoing embodiment of the monitoring method or the foregoing embodiment of the wake-up signal transmission method can be implemented, with the same technical effects achieved. To avoid repetition, details are not described herein again.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiment of the monitoring method or the foregoing embodiment of the wake-up signal transmission method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a communication device, where the communication device is configured to perform the processes of the foregoing embodiment of the monitoring method or the foregoing embodiment of the wake-up signal transmission method, with the same technical effects achieved. To avoid repetition, details are not described herein again.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A monitoring method, comprising:
obtaining, by a terminal, wake-up signal configuration information;
performing, by the terminal, detection for a wake-up signal within a first duration according to the wake-up signal configuration information, wherein the first duration belongs to a physical downlink control channel PDCCH monitoring period configured by a network-side device; and
determining, by the terminal, a monitoring behavior for a target channel based on the detection of the wake-up signal, wherein the target channel comprises at least one of the following:
physical downlink control channel PDCCH;
physical downlink shared channel PDSCH; and
physical uplink shared channel PUSCH.

2. The method according to claim 1, wherein during the detecting for the wake-up signal, the terminal does not perform monitoring for a first channel, the first channel comprising at least one of PDCCH, PDSCH, and PUSCH.

3. The method according to claim 1 or 2, wherein the determining, by the terminal, a monitoring behavior for a target channel based on the detection of the wake-up signal comprises:
in a case that the terminal detects the wake-up signal or in a case that the terminal detects the wake-up signal and the wake-up signal indicates monitoring the target channel, performing, by the terminal, monitoring for the target channel.

4. The method according to claim 3, wherein the terminal does not perform detection for the wake-up signal during the monitoring for the target channel.

5. The method according to claim 1 or 2, wherein the determining, by the terminal, a monitoring behavior for a target channel based on the detection of the wake-up signal comprises:
in a case that the terminal does not detect the wake-up signal or in a case that the terminal detects the wake-up signal and the wake-up signal indicates not monitoring the target channel, skipping, by the terminal, the monitoring for the target channel.

6. The method according to claim 1 or 2, wherein the determining, by the terminal, a monitoring behavior for a target channel based on the detection of wake-up signal comprises:
in a case that the terminal detects a wake-up signal and the wake-up signal indicates a first time interval, performing, by the terminal, monitoring for the target channel when or after the ending of the first time interval, and/or skipping, by the terminal, the monitoring for the target channel within the first time interval.

7. The method according to claim 6, wherein the method further comprises:
performing, by the terminal, detection for the wake-up signal within the first time interval.

8. The method according to claim 1, wherein the method further comprises:
in a case that the terminal receives a second-channel skipping indication, performing, by the terminal, detection for the wake-up signal within the second-channel skipping duration indicated by the second-channel skipping indication.

9. The method according to claim 1, wherein the method further comprises:
in a case that the terminal detects the wake-up signal or in a case that the terminal detects the wake-up signal and the wake-up signal indicates monitoring the target channel,
starting or restarting, by the terminal, a discontinuous reception DRX inactivity timer;
or
adjusting, by the terminal, the starting time of a DRX onduration timer to be the ending time of a time unit in which the wake-up signal is detected.

10. The method according to claim 1, wherein the method further comprises:
in a case that the terminal detects the wake-up signal and the wake-up signal indicates a second time interval,
starting or restarting, by the terminal, a DRX inactivity timer when or after the ending of the second time interval; or
adjusting, by the terminal, the starting time of a DRX onduration timer to be the ending time of the second time interval; wherein
the terminal performs monitoring for the target channel when or after the ending of the second time interval, and/or the terminal skips the monitoring for the target channel within the second time interval.

11. The method according to claim 1, wherein the wake-up signal configuration information comprises at least one of the following:
a wake-up signal monitoring occasion;
the first duration;
a first timer, wherein a length of the first timer is equal to a length of the first duration, and the terminal performs a behavior of monitoring for the wake-up signal and the monitoring behavior for the target channel during the running of the first timer;
a wake-up signal monitoring period;
a period of the first duration;
a time-frequency domain resource occupied by a wake-up signal;
a frequency hopping format of a wake-up signal; and
sequence information of a wake-up signal.

12. The method according to claim 11, wherein the wake-up signal monitoring occasion is configured to be within the first duration.

13. The method according to claim 11 or 12, wherein the performing, by the terminal, detection for a wake-up signal within a first duration according to the wake-up signal configuration information comprises:
performing, by the terminal, detection for the wake-up signal on the wake-up signal monitoring occasion within the first duration, according to the wake-up signal configuration information.

14. The method according to claim 1, wherein the first duration is a discontinuous reception DRX onduration or part of the DRX onduration.

15. The method according to claim 14, wherein the first duration being part of the DRX onduration comprises:
a start time of the first duration is a start time of the DRX onduration and an end time of the first duration is earlier than an end time of the DRX onduration; or
the end time of the first duration is the end time of the DRX onduration and the start time of the first duration is later than the start time of the DRX onduration.

16. The method according to claim 1, wherein the performing, by the terminal, detection for a wake-up signal within a first duration according to the wake-up signal configuration information comprises:
performing, by the terminal, detection for the wake-up signal within the first duration according to the wake-up signal configuration information by using a near-zero power receiver.

17. A wake-up signal transmission method, comprising:
configuring, by a network-side device, wake-up signal configuration information for a terminal; and
transmitting, by the network-side device, a wake-up signal within a first duration according to the wake-up signal configuration information, wherein the first duration belongs to a physical downlink control channel PDCCH monitoring time period configured by the network-side device.

18. The method according to claim 17, wherein the wake-up signal configuration information comprises at least one of the following:
a wake-up signal monitoring occasion;
the first duration;
a first timer, wherein a length of the first timer is equal to a length of the first duration, and the terminal performs a behavior of monitoring for the wake-up signal and monitoring on a target channel during running of the first timer;
a wake-up signal monitoring period;
a period of the first duration;
a time-frequency domain resource occupied by a wake-up signal;
a frequency hopping format of a wake-up signal; and
sequence information of a wake-up signal.

19. The method according to claim 18, wherein the wake-up signal monitoring occasion is configured to be within the first duration.

20. The method according to claim 17, wherein the method further comprises:
in a case that the network-side device transmits the wake-up signal, or in a case that the network-side device transmits the wake-up signal and the wake-up signal indicates monitoring on a target channel,
starting or restarting, by the network-side device, a DRX inactivity timer,
or
adjusting, by the network-side device, the starting time of a DRX onduration timer to be the ending time of a time unit in which the wake-up signal is transmitted.

21. The method according to claim 17, wherein the method further comprises:
in a case that the network-side device transmits the wake-up signal and the wake-up signal indicates a third time interval,
starting or restarting, by the network-side device, a DRX inactivity timer when or after the third time interval elapses; or
adjusting, by the network-side device, the starting time of a DRX onduration timer to be the ending time of the third time interval transmitted; wherein
the terminal performs monitoring on a target channel when or after the third time interval elapses, and/or the terminal skips the monitoring for the target channel within the third time interval.

22. The method according to claim 17, wherein the first duration is a discontinuous reception DRX onduration or part of the DRX onduration.

23. The method according to claim 22, wherein the first duration being part of the DRX onduration comprises:
a start time of the first duration is a start time of the DRX onduration and an end time of the first duration is earlier than an end time of the DRX onduration, or
the end time of the first duration is the end time of the DRX onduration and the start time of the first duration is later than the start time of the DRX onduration.

24. A monitoring apparatus, applied to a terminal and comprising:
a first obtaining module, configured to obtain wake-up signal configuration information;
a first detection module, configured to: perform detection for a wake-up signal within a first duration according to the wake-up signal configuration information, wherein the first duration belongs to a physical downlink control channel PDCCH monitoring time period configured by a network-side device; and
a monitoring determining module, configured to: determine a monitoring behavior for a target channel based on the detection of the wake-up signal, wherein the target channel comprises at least one of the following:
physical downlink control channel PDCCH;
physical downlink shared channel PDSCH; and
physical uplink shared channel PUSCH.

25. The apparatus according to claim 24, wherein during the detecting for the wake-up signal, the terminal does not perform monitoring for a first channel, the first channel comprising at least one of PDCCH, PDSCH, and PUSCH.

26. The apparatus according to claim 24 or 25, wherein the monitoring determining module comprises:
a first submodule, configured to: in a case that the terminal detects the wake-up signal or in a case that the terminal detects the wake-up signal and the wake-up signal indicates monitoring the target channel, perform monitoring for the target channel.

27. The apparatus according to claim 26, wherein the terminal does not perform detection for the wake-up signal during the monitoring for the target channel.

28. The apparatus according to claim 24 or 25, wherein the monitoring determining module comprises:
a second submodule, configured to: in a case that the terminal does not detect the wake-up signal or in a case that the terminal detects the wake-up signal and the wake-up signal indicates not monitoring the target channel, skip monitoring for the target channel.

29. The apparatus according to claim 24 or 25, wherein the monitoring determining module comprises:
a third submodule, configured to: in a case that the terminal detects a wake-up signal and the wake-up signal indicates a first time interval, perform monitoring for the target channel when or after the ending of the first time interval, and/or skip monitoring for the target channel within the first time interval.

30. The apparatus according to claim 29, wherein the apparatus further comprises:
a second detection module, configured to: perform detection for the wake-up signal within the first time interval.

31. The apparatus according to claim 24, wherein the apparatus further comprises:
a third detection module, configured to: in a case that the terminal receives a second-channel skipping indication, perform detection for the wake-up signal within the second-channel skipping duration indicated by the second-channel skipping indication.

32. The apparatus according to claim 24, wherein the apparatus further comprises:
a first processing module, configured to: in a case that the terminal detects the wake-up signal or in a case that the terminal detects the wake-up signal and the wake-up signal indicates monitoring the target channel, start or restart a DRX inactivity timer; or adjust the starting time of the DRX onduration timer to be the ending time of a time unit in which the wake-up signal is detected.

33. The apparatus according to claim 24, wherein the apparatus further comprises:
a second processing module, configured to: in a case that the terminal detects the wake-up signal and the wake-up signal indicates a second time interval, start or restart a DRX inactivity timer when or after the ending of the second time interval; or adjust the starting time of a DRX onduration timer to be the ending time of the second time interval; wherein
the terminal performs monitoring for the target channel when or after the ending of the second time interval, and/or the terminal skips the monitoring for the target channel within the second time interval.

34. A wake-up signal transmission apparatus, applied to a network-side device and comprising:
a first configuration module, configured to configure wake-up signal configuration information for a terminal; and
a transmission module, configured to transmit a wake-up signal within a first duration according to the wake-up signal configuration information, wherein the first duration belongs to a physical downlink control channel PDCCH monitoring time period configured by the network-side device.

35. The apparatus according to claim 34, wherein the wake-up signal configuration information comprises at least one of the following:
a wake-up signal monitoring occasion;
the first duration;
a first timer, wherein a length of the first timer is equal to a length of the first duration, and the terminal performs a behavior of monitoring for the wake-up signal and the monitoring behavior for the target channel during the running of the first timer;
a wake-up signal monitoring period;
a period of the first duration;
a time-frequency domain resource occupied by a wake-up signal;
a frequency hopping format of a wake-up signal; and
sequence information of a wake-up signal.

36. The apparatus according to claim 35, wherein the wake-up signal monitoring occasion is configured to be within the first duration.

37. The apparatus according to claim 34, wherein the apparatus further comprises:
a third processing module, configured to: in a case that the network-side device transmits the wake-up signal, or in a case that the network-side device transmits the wake-up signal and the wake-up signal indicates monitoring on a target channel, start or restart a DRX inactivity timer; or adjust the starting time of a DRX onduration timer to be the ending time of a time unit in which the wake-up signal is transmitted.

38. The apparatus according to claim 34, wherein the apparatus further comprises:
a fourth processing module, configured to: in a case that the network-side device transmits the wake-up signal and the wake-up signal indicates a third time interval, start or restart a DRX inactivity timer when or after the third time interval elapses; or adjust the starting time of a DRX onduration timer to be the ending time of the third time interval transmitted; wherein
the terminal performs monitoring on a target channel when or after the third time interval elapses, and/or the terminal skips the monitoring for the target channel within the third time interval.

39. A communication device, comprising a processor, a memory, and a program or instructions stored in the memory and capable of running on the processor, wherein when the program or instructions are executed by the processor, the steps of the monitoring method according to any one of claims 1 to 16 are implemented, or when the program or instructions are executed by the processor, the steps of the wake-up signal transmission method according to any one of claims 17 to 23 are implemented.

40. A readable storage medium, wherein the readable storage medium stores a program or instructions, and when the program or instructions are executed by a processor, the steps of the monitoring method according to any one of claims 1 to 16 are implemented, or when the program or instructions are executed by a processor, the steps of the wake-up signal transmission method according to any one of claims 17 to 23 are implemented.
